# EUROPEAN PATENT APPLICATION

(11) **EP 1 357 466 A2**
(43) Date of publication of application: **29.10.2003**
(21) Application number: 03251530.6
(22) Date of filing: 13.03.2003
(51) Int. Cl.: G06F 3/06, G06F 3/08

(54) **Information reproducing apparatus with a content reproducing function**

(30) Priority: 26.04.2002 JP 2002126459
(71) Applicant: Kabushiki Kaisha Toshiba, Tokyo (JP)
(72) Inventor: Sakai, Masaki, c/o Intellectual Property Division, Minato-ku, Tokyo 105-8001 (JP); Nagao, Atsushi c/o Intellectual Property Division, Minato-ku, Tokyo 105-8001 (JP)
(74) Representative: Brookes Batchellor

(57) **Abstract**

A central processing unit (21) reads management information corresponding to encoded content information to be reproduced from a storage medium (30) and analyzes the management information, thereby creating read control information. Then, the central processing unit (21) supplies the read control information to a digital signal processing unit (25a) via a bus (22). According to the read control information supplied from the central processing unit (21), the digital signal processing unit (25a) accesses a memory directly via the memory interface (25b) and reads out the encoded content information. Then, the digital signal processing unit (25a) decodes the readout encoded content information and outputs the decoded information.

## Description

This invention relates to an information reproducing apparatus, such as a personal computer, a PDA (Personal Digital Assistant), a mobile phone, or a portable player, and more particularly to an information reproducing apparatus with the function of reproducing content information, such as compressed music data or moving picture data, in real time.

In recent years, a content information providing service has been available to users. The content information includes, for example, music data or moving picture data, or both. This type of service includes the following: one is such that content information is compressed by encoding techniques, such as MPEG (Moving Picture Experts Group), and the compressed content information is stored in such a memory as a memory card, which is then provided for users, and another is such that the compressed content information is downloaded from a server via a communication network to an information communication terminal, such as the mobile phone of a user. Use of this type of service enables the user to acquire the desired content information easily and enjoy the reproduced content information.

An information reproducing apparatus for reproducing the content information is configured as follows. An information reproducing apparatus includes, for example, a central processing unit (CPU) composed of a microprocessor. A main memory, a display module, and a memory card interface circuit are connected to the CPU via a bus. A memory card using, for example, a flash EEPROM is connected to the memory card interface circuit. In the memory card, compressed music data and its management data (FAT: File Allocation Table) have been stored.

A digital/analog (D/A) conversion interface circuit is connected to the CPU. A digital/analog (D/A) converter is connected to the D/A conversion circuit. An analog audio circuit is connected to the D/A converter. The analog audio circuit is composed of, for example, an amplifier circuit for amplifying an analog audio signal and a speaker. The CPU and D/A conversion interface circuit constitute a single baseband module in LSI form. The information reproducing apparatus also includes a key input section. The key input section is used for the user to input operation information. The operation information is inputted to the baseband module.

With this configuration, when the compressed music data stored in the memory card is reproduced, the CPU takes in management data from the memory card via the memory card interface circuit. Then, the CPU analyzes the management data to determine in what order the compressed music data has been stored in the sectors of the memory card. Then, On the basis of the result of the analysis, the CPU accesses the memory card via the memory card interface circuit, thereby reading the compressed music data sequentially. Next, the CPU decodes the read-out compressed music data, thereby decompressing the music data. Then, the CPU supplies the decompressed music data to the D/A converter via the D/A conversion interface circuit. In this way, the music data is converted by the D/A converter into an analog audio signal. The analog audio signal is supplied to the audio output section, which outputs the audio signal over the speaker.

In the apparatus configured as described above, the CPU carries out an entire series of processes, including the process of reading and analyzing the management data, the process of selectively reading the compressed music data and analyzing the data, and the process of reproducing the decompressed music data and outputting the reproduced data. This makes the processing load on the CPU very large. Therefore, a CPU with a large processing capability is required, resulting in an increase in the cost of the apparatus. In addition, the power consumption of the apparatus increases, which shortens the battery service life of the battery-powered apparatus and therefore makes the continuous reproducing time shorter.

On the other hand, in another proposed configuration of the information reproducing apparatus, a signal processing special device (e.g., DSP: Digital Signal Processor) is provided separately from the CPU and the compressed music data is decompressed by the DSP. With this configuration, the CPU need not decompress the compressed music data, which decreases the processing load accordingly.

Even with such a configuration, the CPU still has to carry out the process of reading and analyzing the management data, the process of accessing the memory card on the basis of the result of the analysis of the management data and reading the compressed music data sequentially, and the process of transferring the read-out compressed music data to the DSP and causing the DSP to decompress the compressed music data. Therefore, the processing load on the CPU is still heavy.

As described above, the conventional information reproducing apparatus has disadvantages in that the processing load on the CPU is large, the battery service life is shortened due to an increase in the power consumption, and the cost of the apparatus increases.

The object of the present invention is to provide not only an information reproducing apparatus capable of decreasing the processing load on the central processing unit further, thereby reducing the power consumption and therefore lengthening the battery service life and lowering the cost of the apparatus, but also a signal processing module for the information reproducing apparatus and a signal processing program for the apparatus.

The foregoing object is accomplished by an information reproducing apparatus comprising a memory to store encoded content information together with management information for the encoded content information, a digital signal processing unit connected to the memory via a memory interface, and a central processing unit connected not only to the memory via the memory interface but also the digital signal processing unit via a bus, wherein the central processing unit reads management information corresponding to the encoded content information to be reproduced from the memory, analyzes the management information to create read control information, and supplies the read control information to the digital signal processing unit via the bus, and the digital processing unit accesses the memory directly via the memory interface according to the read control information supplied from the central processing unit, decodes the read-out encoded content information, and outputs the decoded information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a circuit block diagram showing the configuration of a mobile communication terminal with an audio reproducing function, which is a first embodiment of an information reproducing apparatus according to the present invention;
FIG. 2 is a signal sequence diagram to help explain the music data reproducing operation in the mobile communication terminal of FIG. 1;
FIG. 3 is a circuit block diagram showing the configuration of a mobile communication terminal with an audio reproducing function, which is a second embodiment of an information reproducing apparatus according to the present invention; and
FIG. 4 is a signal sequence diagram to help explain the music data reproducing operation in the mobile communication terminal of FIG. 3.

### (First Embodiment)

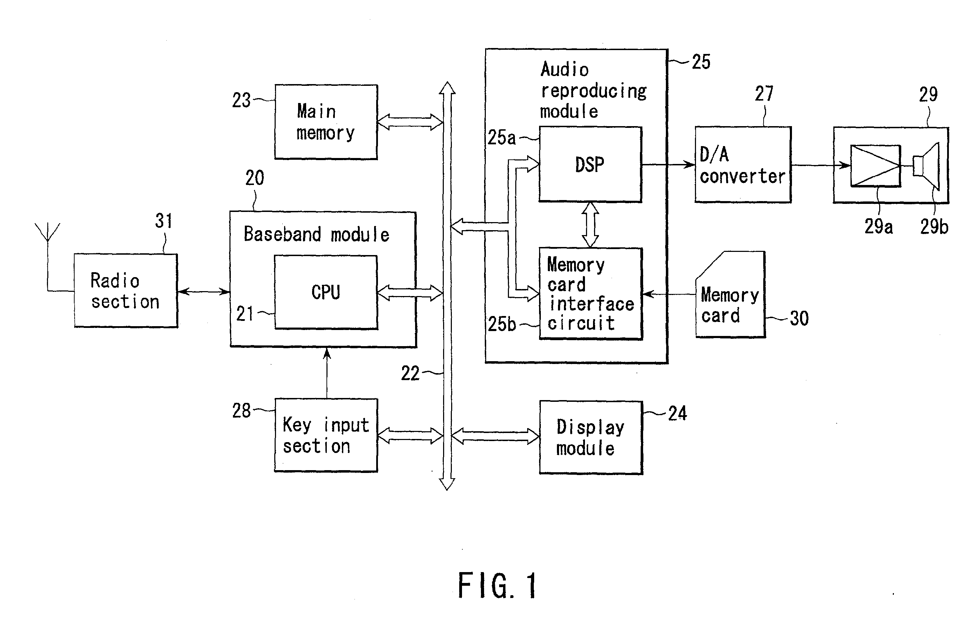

FIG. 1 is a circuit block diagram showing the configuration of a mobile communication terminal with an audio reproducing function, which is a first embodiment of an information reproducing apparatus according to the present invention.

The mobile communication terminal comprises a baseband module 20 including a central processing unit (CPU) 21. The baseband module 20 is composed of an LSI (Large-Scale Integration Circuit). A radio section 31 is connected to the baseband module 20. Under the control of the CPU 21, the radio section 31 exchanges a radio signal with a base station (not shown) via a radio channel.

To the CPU 21, a main memory 23, a display module 24, and an audio reproducing module 25 are connected. Not only control programs for the CPU 21 but also management data, including a telephone directory and a transmission/reception history, are stored in the main memory 23. The display module 24 has, for example, a liquid-crystal display unit (LCD: Liquid Crystal Display) and a light-emitting diode (LED). Not only transmission/reception data, such as mail, but also the telephone directory, the telephone number of the terminal used by the user of the other party, the transmission/reception history, the operating state of its own terminal, and the like are displayed on the LCD. The LED is also used to display the notice of reception and the charged state of the battery.

The audio reproducing module 25 is such that a digital signal processing device (DSP: Digital Signal Processor) 25a and a memory card interface circuit 25b are intergraded into a single LSI chip. A memory card 30 is connected to the memory card interface circuit 25b. The memory card 30 is composed of, for example, a flash EEPROM. In the memory card 30, compressed music data and its management data (FAT: File Allocation Table) are stored. The memory card interface circuit 25b has a DMA (Direct Memory Access) circuit. The data stored in the memory card 30 is read out by accessing the card not only from the CPU 21 but also from the DSP 25a.

The DSP 25a, which operates according to a program previously stored in an internal memory, has the following processing functions. To the DSP 25a, the CPU 21 supplies sector order information as readout control information. According to the supplied sector order information, the DSP 25a accesses the memory card 30 directly via the memory interface circuit 25b. In the access, the memory card 30 reads the compressed music data in sectors. The DSP 25a decodes the read-out compressed music data, thereby decompressing the music data. Then, the DSP 25a supplies the decompressed music data to a digital/analog (D/A) converter 27.

The D/A converter 27 converts the music data supplied from the DSP 25a into an analog audio signal. Then, the D/A converter 27 outputs the analog audio signal to an analog audio circuit 29. The analog audio circuit 29 is composed of, for example, an amplifier 29a for amplifying an analog audio signal and a speaker 29b. The amplifier circuit 29a amplifies the analog audio signal outputted from the D/A converter 27. Then, the amplified audio signal is outputted over the speaker 29b.

In FIG. 1, numeral 28 indicates a key input section for the user of the terminal to input operation information. The key input section 28 includes not only dialing keys but also a plurality of keys, including a transmit key, an end key, a power key, a volume control key, and a mode specify key. The operation information from the key input section 28 is inputted to the baseband module 20.

The CPU 21 includes not only various control functions related to mobile communication but also a control function for reproducing the compressed music data stored in the memory card 30. The control function for reproducing the compressed music data starts control when the reproduction of the compressed music data stored in the memory card 30 is specified. Then, the CPU 21 accesses the memory card 30 and reads the management data (FAT). Then, the CPU 21 analyzes the read-out FAT and creates a sector chain list. After this, the CPU 21 informs the DSP 25a of the sector order information according to the sector chain list each time a sector order information notice request arrives from the DSP 25a. The sector order information is for specifying a plurality of sectors as a data readout area in the memory card 30.

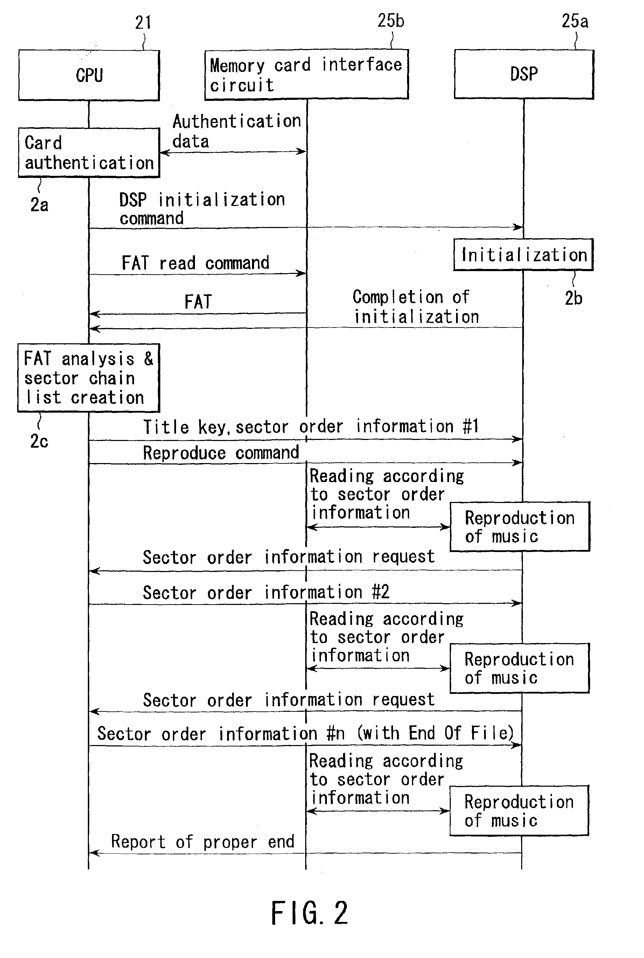

Next, the operation of reproducing the music data in the mobile communication terminal configured as described above will be explained. FIG. 2 is a signal sequence diagram to help explain the operation.

To reproduce the music data, the user installs the memory card 30 in the card slot (not shown). The card slot is connected to the memory interface circuit 25b. The user then inputs a music data reproduce request from the key input section 28.

Then, the CPU 21 reads authentication data from the memory card 30 via the memory card interface circuit 25b and authenticates the card on the basis of the read-out authentication data (step 2a). If the authentication has shown that the memory card 30 can be used, the CPU 21 gives an initialization command to the DSP 25a via the bus 22. As a result, the DSP 25a carries out the process of initializing the operating state in step 2b. After finishing the initializing process, the DSP 25a informs the CPU 21 of the completion of the initialization.

At the same time, the CPU 21 gives a management data (FAT) read command to the memory card interface circuit 25b. Receiving the read command, the memory card interface circuit 25b reads the management data (FAT) from the memory card 30 and transfers the data to the CPU 21 via the bus 22. Receiving the management data (FAT), the CPU 21 analyzes the management data (FAT) received in step 2c and, on the basis of the result of the analysis, creates a sector chain list. The sector chain list is information indicating in what order the sectors in the memory card 30 are read out.

After the sector chain list has been created, the CPU 21 not only informs the DSP 25a of the title key and sector order information #1 via the bus 22 but also gives a reproduce command to the DSP 25a. Receiving the reproduce command, the DSP 25a instructs the memory card interface circuit 25b to read the compressed music data, according to the informed title key and sector order information #1. As a result, the memory card interface circuit 25b accesses the memory card 30. In the access, the compressed music data is read from the specified sectors S11, S12, ···, S1m in the memory card 30. The compressed music data read from the sectors S11, S12, ···, S1m is transferred to the DSP 25a.

The DSP 25a decodes the transferred compressed music data, thereby decompressing the music data. Then, the DSP 25a supplies the decompressed music data to the analog audio circuit 29 via the D/A converter 27. Therefore, the analog audio circuit 29 reproduces and outputs the analog audio signal corresponding to the music data in the sectors S11, S12, ···, S1m.

After completing the process of decoding the music data in the sectors S11, S12, ···, S1m, the DSP 25a requests the CPU 21 to notify sector order information. In response to this, the CPU 21 informs the DSP 25a via the bus 22 of the next sector order information #2, according to the previously created sector chain list. According to the informed sector order information #2, the DSP 25a instructs the memory card interface circuit 25b to read the compressed music data. As a result, the memory card interface circuit 25b accesses the memory card 30. In this access, the compressed music data is read from the specified sectors S21, S22, ···, S2m in the memory card 30 and is transferred to the DSP 25a.

The DSP 25a decodes the transferred compressed music data, thereby decompressing the music data. Then, the DSP 25a supplies the decompressed music data to the analog audio circuit 29 via the D/A converter 27. Therefore, the analog audio circuit 29 reproduces and outputs the analog audio signal corresponding to the music data in the sectors S21, S22, ···, S2m.

Similarly, from this point on, each time the process of decoding the music data in one sector is completed, the DSP 25a requests the CPU 21 to notify the next sector order information. Receiving the request, the CPU 21 informs the DSP 25a of sector order information #3, #4, ···, #n. According to the sector order information #3, #4, ···, #n, the DSP 25a accesses the memory card 30 via the memory card interface circuit 25b. In the access, the compressed music data is read from the specified sectors S31 to S3m, S41 to S4m, Sn1 to Snm in the memory card 30 and is loaded into the DSP 25a. The compressed music data is decompressed by the DSP 25a and thereafter is converted into an analog audio signal by the D/A converter 27. Then, the analog audio signal is reproduced in the analog audio circuit 29. The reproduced signal is then outputted over the speaker 29a.

The DSP 25a includes an output buffer. The output buffer adjusts the output timing of each data item in such a manner that the decompressed music data in each sector is continuous.

Then, after the process of reproducing and outputting the music data in the last sector Sn is completed, the DSP 25a informs the CPU 21 that the reproducing process has been completed properly, which completes the reproduction of the compressed music data.

As described above, in the first embodiment, when the compressed music data stored in the memory card 30 is reproduced, the CPU 21 reads the management data (FAT) from the memory card 30 and analyzes the data before reproduction. On the basis of the result of the analysis, the CPU 21 gives sector order information to the DSP 25a. According to the sector order information, the DSP 25a accesses the memory card 30 directly via the memory card interface circuit 25b and reads the compressed music data in sectors. Then, the DSP 25a decompresses the read-out compressed music data. The D/A converter 27 converts the decompressed data into an analog audio signal. The analog audio circuit 29 then reproduces the analog audio signal and outputs the reproduced signal.

Therefore, the CPU 21 has only to carry out the process of analyzing the management data (FAT) and inform the DSP 25a of sector order information. Consequently, as compared with a conventional equivalent which selectively reads the compressed music data from the memory card 30 and transfers the data to the DSP 25a, the processing load on the CPU 21 is decreased remarkably, which reduces the power consumption of the CPU 21. In the first embodiment, the DSP 25a carries out the process of reading the compressed music data from the memory card 30. The power consumed by the DPS 25a is generally lower than the power consumed by the CPU 21. Therefore, the power consumption of the mobile communication terminal is reduced, which lengthens the battery service life.

Furthermore, a decrease in the processing load on the CPU 21 makes it unnecessary to use an expensive CPU with a large processing capability. Since the price of the DSP 25a is generally less than that of the CPU, this lowers the cost of the mobile communication terminal.

Moreover, in the first embodiment, each time the process of decoding the compressed music data stored in one or a plurality of sectors specified in the sector order information notified at a time is completed, the DSP 25a requests the CPU 21 to notify the next sector order information. Receiving the request, the CPU 21 informs the DSP 25a of the next sector order information #3, #4, ···, #n. Then, according to the sector order information #3, #4, ···, #n, the DSP 25a accesses the memory card 30 via the memory card interface circuit 25b and reads the compressed music data from the specified sectors S31 to S3m, S41 to S4m, Sn1 to Snm in the memory card 30 and decompresses the data.

Consequently, the buffer capacity of and the processing load on the DSP 25a can be reduced, which enables an inexpensive DSP 25a to be used to carry out a smooth decompression and reproduction process.

### (Second Embodiment)

A second embodiment of the present invention is such that, in a mobile communication terminal which causes the main memory to store the compressed music data downloaded via a radio channel from, for example, a server on a network, reads the compressed music data from the main memory, decompresses the music data, reproduces the decompressed music data, and outputs the reproduced music data, the CPU carries out only the process of reading and analyzing the management data and the process of specifying the order of sectors on the basis of the result of the analysis and the DSP carries out the process of reading the compressed music data from the main memory and decompressing the compressed music data.

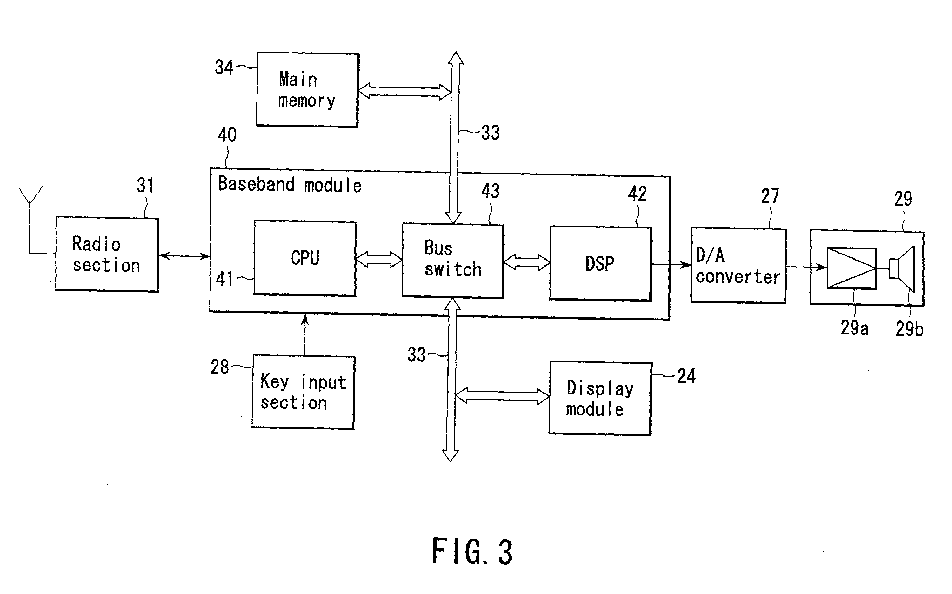

FIG. 3 is a circuit block diagram of a mobile communication terminal, which is a second embodiment of an information reproducing apparatus according to the present invention. In FIG. 3, the same parts as those in FIG. 1 are indicated by the same reference numerals and a detailed explanation of them will be omitted.

A baseband module 40 is such that a central processing unit (CPU) 41, a digital signal processing device (DSP) 42, and a bus switch 43 are integrated into a single LSI chip.

The CPU 41 includes not only a control function related to mobile communication but also a control function of reproducing the compressed music data stored in a main memory 34. The control function of reproducing the compressed music data accesses the main memory 34 via the bus switch 43 and a bus 33, when the reproduction of the compressed music data stored in the main memory 34 is specified. Then, in the access, the CPU 41 reads and takes in the management data (FAT). Then, the CPU 41 analyzes the taken-in management data (FAT) and, on the basis of the result of the analysis, creates a sector chain list.

Receiving a sector order information notice request from the DSP 42, the CPU 41 informs the DSP 42 of sector order information according to the sector chain list. The sector order information is for specifying a plurality of sectors at a time as a data read area in the main memory 34.

The DSP 42, which operates according to a program previously stored in an internal memory, has the following processing functions. According to the sector order information supplied from the CPU 41, the DSP 42 accesses the main memory 34 directly via the bus switch 43 and bus 33 and reads the compressed music data in sectors. The DSP 42 decodes the read-out compressed music data, thereby decompressing the music data. Then, the DSP 42 supplies the decompressed music data to a D/A converter 27.

The bus switch 43 switches the bus 33 according to a request to use the bus made by the CPU 41 or DSP 42.

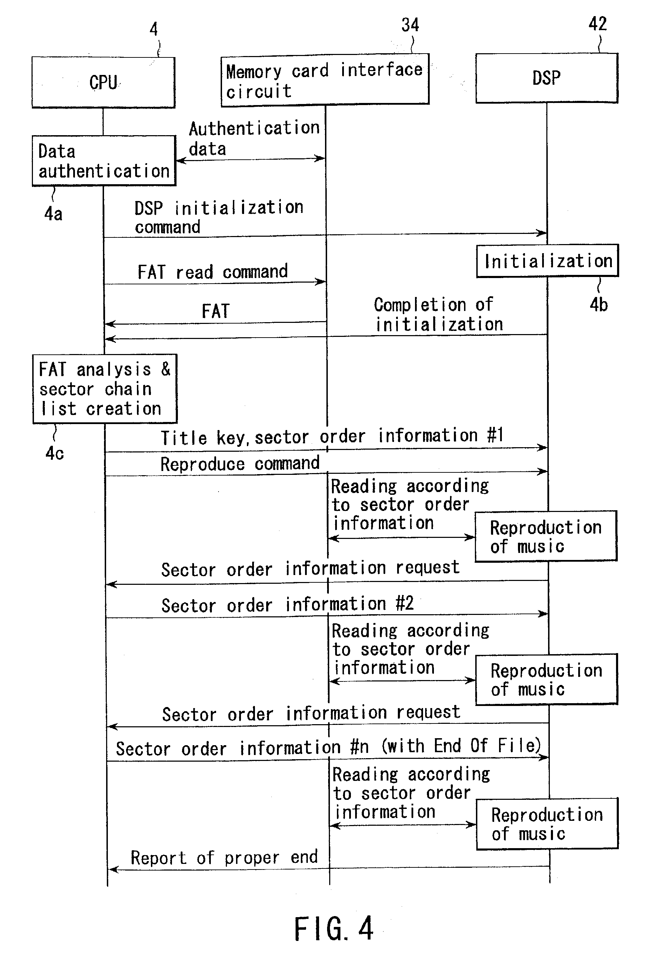

Next, the operation of reproducing the music data in the mobile communication terminal configured as described above will be explained. FIG. 4 is a signal sequence diagram to help explain the operation.

The compressed music data downloaded via a radio channel from a server on a network (not shown) is stored in the main memory 34. In the main memory 34, the management data (FAT) representing the locations in which the data is stored in the main memory is also stored.

In this state, suppose the user inputs a music data reproduce request from the key input section 28. Then, the CPU 41 accesses the main memory 34 via the bus switch 43 and bus 33. In the access, the authentication data is read from the main memory 34. On the basis of the read-out authentication data, the CPU 41 carries out an authenticating process in step 4a. If the result of the authentication has shown that the downloaded music data is reproducible, the CPU 41 gives an initialization command to the DSP 42. As a result, the DSP 42 carries out the process of initializing the operating state in step 4b. After the initializing process is completed, the DSP 42 informs the CPU 41 of the completion of the initialization.

At the same time, the CPU 41 gives a management data (FAT) read command to the main memory 34 via the bus switch 43 and bus 33. Receiving the reading command, the main memory 34 reads the management data (FAT) and transfers the data to the bus 33. The CPU 41 takes in the management data (FAT) from the bus 33. Receiving the management data (FAT), the CPU 41 analyzes the management data (FAT) in step 4c. On the basis of the result of the analysis, the CPU 41 creates a sector chain list. The sector chain list is for specifying a plurality of sectors at a time as a storage area in the main memory 34 in the order in which the data is read from the main memory 34. A sector is a unit in the storage area.

After the sector chain list has been created, the CPU 41 not only informs the DSP 42 of the title key and sector order information #1 via the bus switch 43 but also gives a reproduce command to the DSP 42. Receiving the reproduce command, the DSP 42 instructs the main memory 43 to read the compressed music data via the bus switch 43 and bus 33, according to the informed title key and sector order information #1. As a result, the compressed music data is read from the specified sectors S11, S12, ···, S1m in the main memory 34. The compressed music data read from the sectors S11, S12, ···, S1m is loaded into the DSP 42 via the bus 33 and bus switch 43. The DSP 42 decodes the loaded compressed music data, thereby decompressing the music data. Then, the DSP 42 supplies the decompressed music data to the analog audio circuit 29 via the D/A converter 27. Therefore, the analog audio circuit 29 reproduces and outputs the analog audio signal corresponding to the music data in the sectors S11, S12, ···, S1m.

After completing the process of decoding the music data in the sectors S11, S12, ···, S1m the DSP 42 requests the CPU 41 to notify sector order information. In response to this, the CPU 41 informs the DSP 42 of the next sector order information #2 via the bus switch 43, according to the previously created sector chain list. According to the informed sector order information #2, the DSP 42 instructs the main memory 34 via the bus switch 43 and bus 33 to read the compressed music data. As a result, the compressed music data is read from the specified sectors S21, S22, ···, S2m in the main memory 34. The read-out compressed music data in the sectors S21, S22, ···, S2m are loaded into the DSP 42 via the bus 33 and bus switch 34. The DSP 42 decodes the loaded compressed music data, thereby decompressing the music data. The decompressed music data is converted by the D/A converter 27 into an analog signal, which is then inputted to the analog audio circuit 29. Therefore, the analog audio circuit 29 reproduces and outputs the analog audio signal corresponding to the music data in the sectors S21, S22, ···, S2m.

Similarly, from this point on, each time the process of decoding the music data stored in the sector specified in the sector order information notified at a time is completed, the DSP 42 requests the CPU 41 to notify the next sector order information. Receiving the request, the CPU 41 informs the DSP 42 of sector order information #3, #4, ···, #n. According to the sector order information #3, #4, ···, #n, the DSP 42 accesses the main memory 34 directly via the bus switch 43 and bus 33. In the access, the compressed music data is read from the specified sectors S31 to S3m, S41 to S4m, Sn1 to Snm in the main memory 34 and is loaded into the DSP 42. The compressed music data is decompressed by the DSP 42 and then is converted into an analog audio signal by the D/A converter 27. Thereafter, the analog audio signal is reproduced at the analog audio circuit 29 and is outputted over the speaker 29b.

The DSP 42 includes an output buffer. The output buffer adjusts the output timing of each data item in such a manner that the decompressed music data in each sector is continuous.

Then, after the process of reproducing and outputting the music data in the last sector Sn is completed, the DSP 42 informs the CPU 41 that the reproducing process has been completed properly, which completes the reproduction of the compressed music data.

As described above, in the second embodiment, the bus switch 43 is provided on the bus 33, which enables the DSP 42 to access the maim memory 34 directly and read the compressed music data from the main memory 34 without the intervention of the CPU 41.

Therefore, as in the first embodiment, the CPU 41 has only to carry out the process of analyzing the management data (FAT) and inform the DSP 42 of sector order information. Consequently, as compared with a conventional equivalent which had to cause the CPU 41 to selectively read the compressed music data from the main memory 34 and transfer the data to the DSP 42, the processing load on the CPU 41 is decreased remarkably, which reduces the power consumption of the CPU 41. Furthermore, a decrease in the processing load on the CPU 41 makes it unnecessary to use an expensive CPU with a large processing capability. Since the price of the DSP 42 is generally less expansive than that of the CPU, which lowers the cost of the mobile communication terminal.

In the second embodiment, too, a sector order request and sector order information are exchanged between the DSP 42 and the CPU 41. This makes it possible to reproduce the compressed music data stored in the sectors specified in the sector order information notified at a time. Consequently, the buffer capacity of and the processing load on the DSP 42 can be reduced, which enables an inexpensive DSP 42 to be used to carry out a smooth decompression and reproduction process.

### (Other Embodiments)

While in each of the embodiments, the compressed music data has been decompressed and reproduced, the present invention is not limited to this. For instance, the present invention may be applied to a case where multimedia data including compressed moving picture data, moving picture data, and music data is decompressed and reproduced.

In each of the embodiments, a sector order request and sector order information have been exchanged between the DSP 42 and the CPU 41, thereby enabling the DSP 42 to decompress and reproduce the compressed music data stored in the sectors specified in the sector order information notified at a time. This invention is not restricted to this. For instance, the invention may be applied to another configuration where, when there is room in the processing capability of the DSP or when the amount of data to be reproduced is small, the CPU informs the DSP of all of the sector order information before the start of reproduction and the DSP reads all of the compressed music data from the memory sequentially according to the informed sector order information, decompresses the compressed music data, and reproduces the decompressed data.

As for the type and configuration of the communication terminal apparatus, the type and configuration of content information, the type and configuration of the memory storing content information, the procedure for reading content information, and others, this invention may be practiced or modified in still other ways without departing from the spirit or character thereof.

## Claims

1. An information reproducing apparatus **characterized by** comprising:
a storage medium (30) to store encoded content information and management information for managing the content information;
a digital signal processing unit (25a) connectable to the storage medium via an interface (25b); and
a central processing unit (21) connectable not only to the storage medium (30) via the interface (25b) but also to the digital signal processing unit (25a) via a bus, wherein
the central processing unit (25a) includes
means for reading the management information corresponding to the encoded content information to be reproduced from the storage medium (30) via the interface (25b),
means for creating read control information on the basis of the read-out management information, and
means for supplying the created read control information to the digital signal processing unit (25a) via the bus (22), and
the digital signal processing unit (25a) includes
means for reading the encoded content information from the storage medium (30) according to the read control information supplied from the central processing unit (21), and
means for decoding the read-out encoded content information.

2. The information reproducing apparatus according to claim 1, **characterized in that**
the means for creating read control information creates the read control information for reproducing the encoded content information in units of a predetermined amount on the basis of the read-out management information,
the means for supplying created read control information supplies the created read control information to the digital signal processing unit (25a) via the bus (22) according to a request made by the digital signal processing unit (25a),
the means for reading the encoded content information reads the predetermined amount of encoded content information from the storage medium (30) according to the read control information supplied from the central processing unit (21),
the means for decoding the read-out encoded content information decodes the predetermined amount of encoded content information read-out, and
the digital signal processing unit (25a) further including means for requesting the central processing unit (21) to supply read control information for specifying a predetermined amount of encoded content information to be decoded next after the completion of the decoding of the predetermined amount of encoded content information.

3. The information reproducing apparatus according to claim 2, **characterized in that** the means for creating read control information includes;
means for analyzing a file allocation table read from the storage medium (30) and creating a sector chain list, and
means for creating sector specifying information for specifying a sector to be reproduced in the encoded content information, on the basis of the created sector chain list and the request made by the digital signal processing unit (25a).

4. A digital signal processing unit (25a) for use with a central processing unit (21) having the function of reading management information from a storage medium (30) in which encoded content information and management information for managing the content information are stored and, on the basis of the read-out management information, creating read control information, the digital signal processing unit (25a) comprising:
means for receiving the read control information from the central processing unit (21);
means for reading the corresponding encoded content information from the storage medium (30) according to the received read control information; and
means for decoding the read-out encoded content information.

5. A program stored in a storage device, **characterized by** comprising:
means for instructing a digital signal processing unit (25a) to receive a read control information from a central processing unit (21);
means for instructing the digital signal processing unit (25a) to read a corresponding encoded content information from a storage medium (30) according to the received read control information; and
means for instructing the digital signal processing unit (25a) to decode the read-out encoded content information.

6. An information reproducing apparatus **characterized by** comprising:
a storage device (34) to store encoded content information and management information for managing the content information;
a digital signal processing unit (42) connectable to the storage device (34) via a bus switch (43); and
a central processing unit (41) connectable not only to the storage device (34) but also to the digital signal processing unit (42) via the bus switch (43), wherein
the central processing unit (41) includes
means for reading management information corresponding to the encoded content information to be reproduced from the storage device (34) via the bus switch (43),
means for creating read control information on the basis of the read-out management information, and
means for supplying the created read control information to the digital signal processing unit (42) via the bus switch (43), and
the digital signal processing unit (42) includes
means for reading the encoded content information from the storage device (34) according to the read control information supplied from the central processing unit (41), and
means for decoding the read-out encoded content information.

7. The information reproducing apparatus according to claim 6, **characterized by** further comprising:
means for receiving the content information from a content server via a communication network; and
means for storing the received content information into the storage device.

8. The information reproducing apparatus according to claim 6, **characterized in that**
the means for creating read control information creates the read control information for reproducing the encoded content information in units of a predetermined amount on the basis of the read-out management information,
the means for supplying the created read control information supplies the created read control information to the digital signal processing unit (42) via the bus switch (43) according to a request made by the digital signal processing unit (42),
the means for reading the encoded content information reads the predetermined amount of encoded content information from the storage device (34) via the bus switch (43) according to the read control information supplied from the central processing unit (41),
the means for decoding the read-out encoded content information decodes the predetermined amount encoded content information read out, and
the digital signal processing unit (42) further including means for requesting the central processing unit (41) via the bus switch (43) to supply read control information for specifying a specific amount of encoded content information to be decoded next after the completion of the decoding of the predetermined amount of encoded content information.

9. The information reproducing apparatus according to claim 8, **characterized in that** the means for creating read control information includes
means for analyzing a file allocation table read from the storage device (34) and creating a sector chain list, and
means for creating sector specifying information for specifying a sector to be reproduced in the encoded content information, on the basis of the created sector chain list and the request made by the digital signal processing unit (42).

10. A signal processing module **characterized by** comprising:
a digital signal processing unit (42) connectable via a bus switch (43) to a storage device (34) which stores encoded content information and management information for managing the content information; and
a central processing unit (41) connectable to the storage device (34) and the digital signal processing unit (42) via the bus switch (43), wherein
the central processing unit (41) includes
means for reading management information corresponding to the encoded content information to be reproduced from the storage device (34) via the bus switch (43),
means for creating read control information on the basis of the read-out management information, and
means for supplying the created read control information to the digital signal processing unit (42) via the bus switch (43), and
the digital signal processing unit (42) includes
means for reading the encoded content information from the storage device (34) via the bus switch (43) according to the read control information supplied from the central processing unit (41), and
means for decoding the read-out encoded content information.

11. A program stored in a storage device (34), **characterized by** comprising:
means for instructing a central processing unit (41) to read management information corresponding to encoded content information to be reproduced from a memory (34);
means for instructing the central processing unit (41) to create read control information on the basis of the read-out management information;
means for instructing the central processing unit (41) to supply the created read control information to a digital signal processing unit (42) via a bus switch (43);
means for instructing the digital signal processing unit (42) to read the encoded content information from the memory (34) via the bus switch (43) according to the read control information supplied from the central processing unit (41); and
means for instructing the digital signal processing unit (42) to decode the read-out encoded content information.
